# EUROPEAN PATENT APPLICATION

(11) **EP 4 254 629 A1**
(43) Date of publication of application: **04.10.2023**
(21) Application number: 22822263.4
(22) Date of filing: 11.10.2022
(51) Int. Cl.: H01M 50/244, H01M 50/204, H01M 50/249, H01M 50/289

(54) **BATTERY MODULE AND ELECTRIC VEHICLE**

(30) Priority: 11.02.2022 CN 202220280498 U
(71) Applicant: Eve Power Co., Ltd., Jingmen, Hubei 448000 (CN)
(72) Inventor: LI, Fan, Jingmen, Hubei 448000 (CN); HUANG, Ying, Jingmen, Hubei 448000 (CN); CHEN, Zhaohai, Jingmen, Hubei 448000 (CN); CHEN, Zhiwei, Jingmen, Hubei 448000 (CN); QIU, Wencong, Jingmen, Hubei 448000 (CN); RAO, Yan, Jingmen, Hubei 448000 (CN); WANG, Honghu, Jingmen, Hubei 448000 (CN); CHEN, Shuxian, Jingmen, Hubei 448000 (CN)
(74) Representative: Murgitroyd & Company
(86) International application number: PCT/CN2022/124614
(87) International publication number: WO 2023/151296

(57) **Abstract**

A battery module and an electric vehicle are provided by the present application. The battery module includes a case body and a tray; an exhaust port is defined in the case body, a tray mounting cavity is defined in the case body, and the tray mounting cavity includes a first mounting surface surrounding a periphery of the tray; the tray is disposed in the tray mounting cavity to divide the tray mounting cavity into a cell accommodating cavity located above the tray and a pressure relief cavity located below the tray, the tray is provided with through holes facing battery cells, the pressure relief cavity is communicated with the through holes and the exhaust port, respectively, and the cell accommodating cavity is configured to accommodate the battery cells; the tray includes a second mounting surface, and the second mounting surface abuts against the first mounting surface, and flatness of the second mounting surface and flatness of the first mounting surface are both not greater than 0.5 mm.

## Description

### CROSS REFERENCE TO RELATED APPLICATIONS

This disclosure claims priority benefits to Chinese Patent Application No. 202220280498.1 filed on Feb. 11, 2022. The contents of all of the aforementioned application, including any intervening amendments thereto, are incorporated herein by reference.

### TECHNICAL

The present application relates to a technical field of power batteries, and particularly relates to a battery module and an electric vehicle.

### BACKGROUND

In recent years, new energy vehicles have developed by leaps and bounds, especially those powered by lithium batteries. Cylindrical battery cells in the lithium batteries are widely used in power systems. Due to small capacity of a single cylindrical cell, a large number of cylindrical batter cells in a single string will be needed.

In cylindrical battery modules of related technologies, a plurality of battery cells are carried by a tray and placed in a case body, and a pressure relief cavity is defined between the tray and the case body. When thermal runaway occurs in one of the battery cells, an explosion-proof valve of the battery cells is opened, and gas and jets generated inside the one of battery cells are discharged into the pressure relief cavity to prevent the one of the battery cells from catching fire or exploding. However, there is an assembly gap between the tray and the case body, so that the gas or the jets generated by the one of the battery cells can contact the battery cells located above the tray through the assembly gap, which may easily lead to thermal runaway of the battery cells one after another, resulting in safety accidents.

The above problems are solved in some of the battery modules by setting a sealing part between the tray and the case body, but adding the sealing part increases difficulty of assembly and increases cost.

### SUMMARY

The present application provides a battery module, which can solve a problem that gas generated after thermal runaway of battery cells is in contact with the battery cells located above a tray, a problem of increasing cost of installing a sealing part, and a problem of assembly difficulty.

The present application provides following technical solutions:

A battery module includes a case body and a tray;
an exhaust port is defined in the case body, a tray mounting cavity is defined in the case body, and the tray mounting cavity includes a first mounting surface surrounding a periphery of the tray;
the tray is disposed in the tray mounting cavity to divide the tray mounting cavity into a cell accommodating cavity located above the tray and a pressure relief cavity located below the tray, the tray is provided with through holes facing battery cells, the pressure relief cavity is communicated with the through holes and the exhaust port, respectively, and the cell accommodating cavity is configured to accommodate the battery cells; and
the tray includes a second mounting surface, and the second mounting surface abuts against the first mounting surface.

The present application also provides an electric vehicle, which can avoid safety accidents caused by the battery module and improve safety performance of an vehicle.

The electric vehicle includes the above-mentioned battery module.

### BRIEF DSCRIPTION THE DRAWINGS

FIG. 1 is a top view of a battery module provided by an embodiment of the present application.
FIG. 2 is a partial schematic structural view of the battery module provided by an embodiment of the present application.
FIG. 3 is a sectional view of an A-A direction in FIG. 1.
FIG. 4 is a partial enlarged view of a D in FIG. 2.
FIG. 5 is a partial enlarged view of a C in FIG. 3.
FIG. 6 is a sectional view of a B-B direction in FIG. 1.

In the above figures:
1. case body; 11. Bottom guard plate; 111. first protruding part; 112. second protruding part; 101. first mounting surface; 102. second mounting surface; 103. third mounting surface; 104. fourth mounting surface; 12. front side plate; 121. first boss; 13. left and right side plates; 14. rear side plate; 1510. longitudinal beam; 151. first longitudinal beam; 152. second longitudinal beam; 1610. cross beam; 161. first cross beam; 162. second cross beam; 1621. second boss; 163. third cross beam; 17. reinforcing block; 2. tray; 21. tray flange; 22. through hole; 23. fixing boss; 33. sealing plate mounting cavity; 3. sealing plate; 4. pressure relief valve; 5. tray fixing bolt; 6. sealing part; 7. tray mounting cavity; 8. cell accommodating cavity; 9. pressure relief cavity; 10. exhaust port; 100. exhaust channel; 110. side plate.

### DETAILED DESCRIPTION OF THE EMBODIMENTS

The present application will be described in further detail below in conjunction with the drawings and embodiments. It can be understood that the embodiments described herein are only used to explain the present application. In addition, it should be noted that, for the convenience of description, the drawings only show some but not all structures related to the present application.

In description of the present disclosure, unless otherwise specified and defined, terms "connected" and "fixed" should be understood in a broad sense, for example, it may be a fixed connection, a detachable connection, or a whole; it may be a mechanical connection or an electrical connection; it may be a directly connection or an indirectly connection through an intermediate media; and it may be an internal connection of two components or an interaction relationship between two components. For those skilled in the art, meanings of the above terms in the present disclosure can be understood according to situations.

In the present disclosure, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "above" or "up" the second feature includes that the first feature is directly above or obliquely above the second feature, or only indicate that a horizontal height of the first feature is greater than a horizontal height of the second feature. That the first feature is disposed "below", "under", or "underneath" of the second feature include that the first feature is directly below or obliquely below the second feature, or only indicate that the horizontal height of the first feature is less than the horizontal height of the second feature.

In the description of this embodiment, terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present disclosure. In addition, terms "first" and "second" are only used to distinguish in terms of description and have no special meanings.

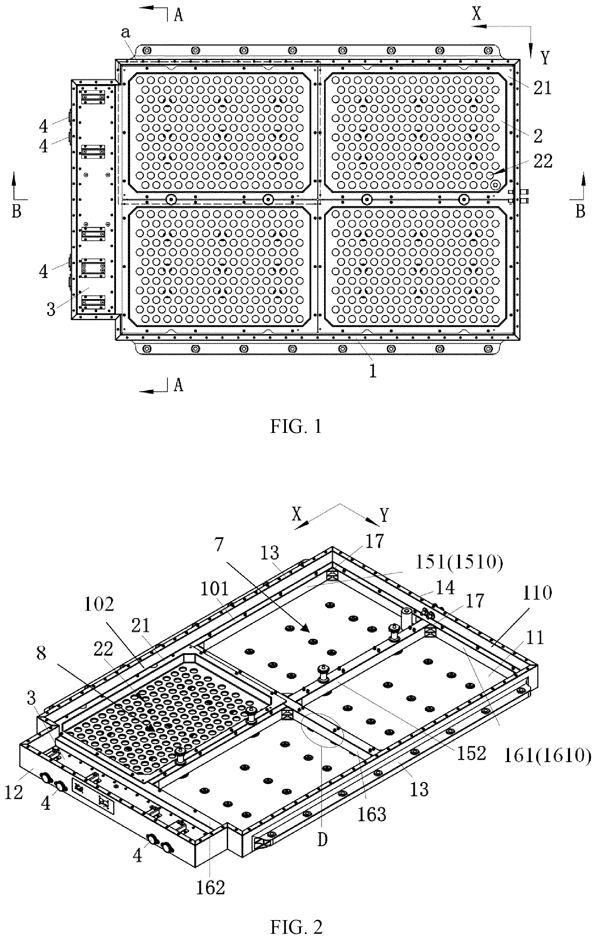

This embodiment provides a battery module, as shown in FIG. 1 and FIG. 2, the battery module includes a case body 1 and a tray 2. The tray 2 is configured to install battery cells, and a plurality of the battery cells are fixed on the tray 2 to form battery cell groups. A tray mounting cavity 7 is defined in the case body 1, the tray is disposed in the tray mounting cavity 7 to divided the tray mounting cavity 7 into a cell accommodating cavity 8 located above the tray 2 and a pressure relief cavity 9 located below the tray 2. The cell accommodating cavity 8 is configured to accommodate the battery cells, the tray 2 is provided with through holes 22 facing battery cells. The pressure relief cavity 9 is communicated with the through holes 22 and the exhaust port 10, respectively. When thermal runaway occurs in a battery cell, an explosion-proof valve of the battery cell is opened, and gas and jets generated in the battery cell can enter the pressure relief cavity 9 through the through holes 22 and be discharged through the exhaust port 10 to prevent the battery cell from burning or explode. In addition, through the above setting, an area of the pressure relief cavity 9 is larger than an area of a through hole 22, and the gas discharged from the battery cell is quickly discharged to the pressure relief cavity 9 through the through hole 22, and then passes through the exhaust port 10 after the pressure decreases, which is beneficial to improve safety performance of the battery module.

In one embodiment, at least one tray mounting cavity 7 is defined in the case body 1.

As shown in FIG. 2, in order to prevent gas and jets generated when thermal runaway of the battery cells enter into the cell accommodating cavity 8 from an assembly gap between the tray 2 and the case body 1, the tray mounting cavity 7 includes a first mounting surface surrounding a periphery of the tray 2, the tray 2 includes a second mounting surface 102, the second mounting surface 102 abuts against the first mounting surface 101. Optionally, flatness of the second mounting surface 102 and flatness of the first mounting surface 101 are both not greater than 0.5 millimeters (mm).

By controlling the flatness of the first mounting surface 101 and the flatness of the second mounting surface 102 in this embodiment, the assembly gap between the first mounting surface 101 and the second mounting surface 102 can be controlled within a relatively small range, and within this range, the gas located in the pressure relief cavity 9 cannot pass through the assembly gap, so as to prevent the gas generated when the battery cells occur the thermal runaway from entering into the cell accommodating cavity 8, thereby preventing the thermal runaway of the battery cells from spreading, which is conducive to improving security feature of the battery module.

In addition, by controlling the flatness of the first mounting surface 101 and the flatness of the second mounting surface 102, there is no need to dispose a sealing part 6 between the first mounting surface 101 and the second mounting surface 102, which is beneficial to simplify structure of the battery module and reduce an assembly difficulty.

Optionally, the flatness of the first mounting surface 101 and the flatness of the second mounting surface 102 may be 0.4 mm, 0.3 mm, 0.2 mm, or 0.1 mm.

As shown in FIG. 2, the case body 1 includes a bottom guard plate 11, side plates 110, a plurality of cross beams 1610, and a plurality of longitudinal beams 1510. Each side edge of the bottom guard plate 11 is connected to one of the side plates 110; the cross beams 1610 and the longitudinal beams 1510 are both located on the bottom guard plate 11 and are disposed in a cross manner, which is beneficial to improve strength of the bottom guard plate 11. The plurality of cross beams 1610 and the plurality of longitudinal beams 1510 are crossed to define tray mounting cavities 7 configured to accommodate the tray 2, and top surfaces of the cross beams 1610 and top surfaces of the longitudinal beams 1510 constitute the first mounting surface 101.

In order to facilitate the tray 2 to be fixed in the tray mounting cavity 7, the tray 2 includes a tray body and a tray flange 21 circumferentially disposed around the tray body, and a bottom surface of the tray flange 21 is the second mounting surface 102. The tray flange 21 is overlapped on the first mounting surface 101, and the tray body is located in the tray mounting cavity 7, so that a bottom surface of the tray 2 can be spaced from the bottom guard plate 11 to define the pressure relief cavity 9. Optionally, the tray flange 21 can be fixedly connected to the first mounting surface 101 by a screw, which is convenient for installation.

As shown in FIG. 1 and FIG. 2, in this embodiment, the longitudinal beams 1510 extend in an X direction, and the cross beams 1610 extend in a Y direction. In this embodiment, the X direction is perpendicular to the Y direction, that is, the cross beams 1610 and the longitudinal beams 1510 are perpendicular. In other embodiments, the cross beams 1610 and the longitudinal beams 1510 may also be dispose at acute angles.

The cross beams 1610 and the longitudinal beams 1510 are arranged crosswise to divide space in the case body 1 into a plurality of tray mounting cavities 7, referring to a region a marked by a dotted line in FIG. 1, and each of tray mounting cavities 7 is provided with one of trays 2 installed therein. This arrangement enables a plurality of the battery cells in the case body 1 to be divided into multiple groups for installation, which facilitates adaptive adjustment of a number of the battery cell groups according to a volume of the case body 1, and an assembly method is more flexible.

It can be understood that the tray 2 is arranged in the tray mounting cavity 7, so that the tray mounting cavity 7 has positioning effect on the tray 2, which facilitates installation and fixation of the tray 2.

In this embodiment, the bottom guard plate 11 is substantially rectangular, and a quantity of the side plates 110 is four, which are two left and right side plates 13, a front side plate 12, and a rear side plate 14, respectively. The two left and right side plates 13 are arranged in the Y direction, and the front side plate 12 and the rear side plate 14 are arranged in the X direction.

A quantity of longitudinal beams 1510 is three, which are two first longitudinal beams 151 and a second longitudinal beam 152, the second longitudinal beam 152 is located between the two first longitudinal beams 151, and the two first longitudinal beams 151 are respectively connected to parallel and adjacent ones of the side plates, that is, the two of first longitudinal beams 151 are connected to a corresponding left and right side plates 13, respectively.

A quantity of the cross beams 1610 is three, which are a first cross beam 161, a second cross beam 162, and a third cross beam 163, respectively. The third cross beam 163 is located between the first cross beam 161 and the second cross beam 162, and the first cross beam 161 is connected to the rear side plate 14. The third cross beam 163 and the second longitudinal beam 152 are cross-shaped, and a middle portion of the first cross beam 161 and a middle portion of the second cross beam 162 are respectively connected to two end portions of the second longitudinal beam 152. Three cross beams 1610 and three longitudinal beams 1510 are crossed to define four tray mounting cavities 7.

Optionally, the first cross beam 161 and the first longitudinal beam 151 may be protruding structures of corresponding ones of the side plates, which is beneficial to simplify a number of parts and improve the fixing effect of the first cross beam 161 and the first longitudinal beam 151 and the corresponding ones of the side plates.

In this embodiment, the cross beams 1610 extend along the Y direction, and the longitudinal beams 1510 extend along the X direction, so that each installation position a can be rectangular and regular in shape, which facilitates arrangement of the battery cells in each of the battery cell groups, and it is beneficial to make full use of the space inside the case body 1.

In order to reduce air pressure in the pressure relief cavity 9 from the thermal runaway of the battery cells, at least part of the cross beams 1610 and at least part of the longitudinal beams 1510 are all spaced from the bottom guard plate 11, so that pressure relief cavities 9 in the plurality of tray mounting cavities 7 communicate with each other to increase volumes of pressure relief cavities 9, and reduce the pressure in the pressure relief cavities 9.

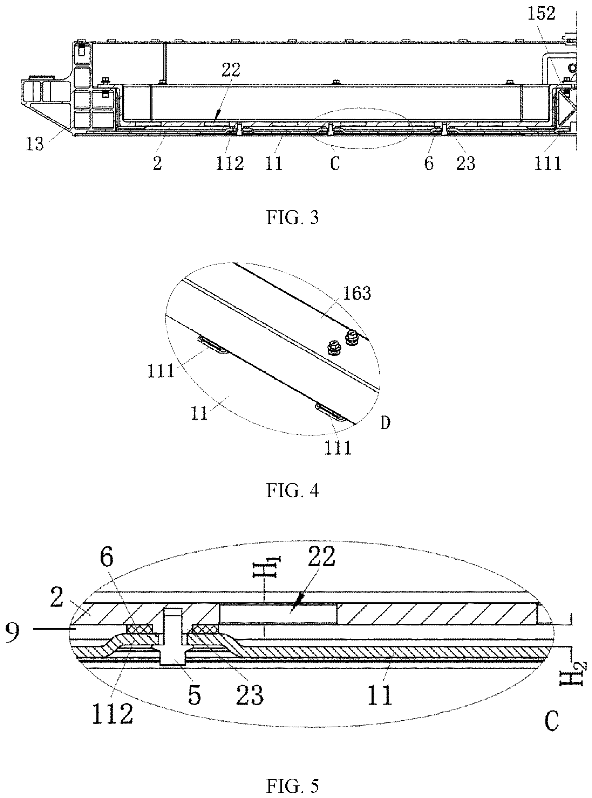

As shown in FIG. 3 and FIG. 4, first protruding parts 111 are provided on the bottom guard plate 11 at intervals, the first protruding parts 111 protrude toward a direction of the tray 2 and abut against the cross beams 1610 and the longitudinal beams 1510, so that a position where the first protruding parts 111 are not provided on the bottom guard plate 11 is spaced from the cross beams 1610 and the longitudinal beams 1510.

In this embodiment, a plurality of the first protruding parts 111 are arranged at intervals along a length direction of the cross beams 1610 on the bottom guard plate 11 at a position below the cross beam 1610, so that the cross beams 1610 are partially in contact with the bottom guard plate 11. The plurality of the first protruding parts 111 are arranged at intervals along a longitudinal direction of the longitudinal beams 1510 at a position of the bottom guard plate 11 below the longitudinal beams 1510, so that the longitudinal beams 1510 are partially in contact with the bottom guard plate 11. Optionally, the first protruding parts 111 may be convex hulls.

In some embodiments, the cross beams 1610, the longitudinal beams 1510, and the first protruding parts 111 can be fixed by bolts, respectively.

In this embodiment, the cross beams 1610 and the longitudinal beams 1510 are both fixed to the first protruding parts 111 by spot welding.

In a related technology, the plurality of the battery cells in the case body 1 are generally disposed on a frame body with a greater size, and the frame body is fixed in the case body 1 by adhesive bonding. Due to the large size of the frame body, generally only four sides of the frame body are fixed to the case body 1, resulting in insufficient support in a middle of the frame body, and the frame body is easily deformed. Therefore, this kind of structure has high requirements on a strength of the frame body, and also increases requirements on the adhesive bonding effect, which is difficult to manufacture and high in production cost.

In this embodiment, by setting the cross beams 1610 and the longitudinal beams 1510 in the case body 1, strength of the case body 1 can be improved, and material requirements of the case body 1 can be reduced; the space in the case body 1 is divided into the plurality of tray mounting cavities 7 with smaller dimensions by the cross beams 1610 and the longitudinal beams 1510. Using a plurality of the trays 2 with small-sized to replace a large-sized frame body and a middle-sized frame body in the related technology to increase strength of each of the trays 2, improves stability of structure of the battery cell groups, and also reduces the requirements for the fixing strength of the trays 2, which is conducive to reducing the manufacturing difficulty and cost.

Optionally, the case body 1 is further provided with a reinforcing block 17, the reinforcing block 17 is disposed in the tray mounting cavity 7 and located at a corner of the tray mounting cavity 7, and two ends of the reinforcing block 17 are respectively abutted against or connected to adjacent two side surface of the tray mounting cavity 7 to improve the strength of the case body 1. In this embodiment, the reinforcing block 17 is disposed at connections between the cross beams 1610 and the longitudinal beams 1510, and adjacent two side surfaces of the reinforcing block 17 abutted against or connected to the cross beams 1610 and the longitudinal beams 1510, respectively.

In this embodiment, four exhaust ports 10 are defined on the front side plate 12 of the case body 1 to increase exhaust flow. In other embodiments, a quantity of the exhaust ports 10 may be one, two, three, five, or more. The exhaust ports 10 can also be defined on the bottom guard plate 11 of the case body 1 or other side plates.

In order to prevent a middle part of the tray 2 from being deformed by the gravity of the battery cells and affecting normal exhaust of the pressure relief cavity 9, as shown in FIG. 3 and FIG. 5, the bottom surface of the tray 2 and the bottom guard plate 11 are fixed by tray fixing bolts 5. On the one hand, the tray fixing bolts 5 can fix the tray 2 and the case body 1, on the other hand, the tray fixing bolts 5 can also support the tray 2, so as to avoid deformation of the tray 2.

Optionally, the tray fixing bolts 5 pass through the bottom guard plate 11 through a bottom of the bottom guard plate 11 and are fixed to the tray 2 to prevent the tray fixing bolts 5 from affecting the arrangement of the plurality of battery cells on the tray 2.

In order to ensure the fixing effect of the tray fixing bolts 5 and the tray 2, a back surface of the tray 2 is protruded with fixing bosses 23, threaded holes are defined on the fixing bosses 23, and communicating holes are defined on the bottom guard plate 11. The tray fixing bolts 5 pass through the communicating holes and then threadedly fit with the threaded holes. By setting the fixing bosses 23, a thickness of the tray 2 can be partially increased to ensure depths of the threaded holes, so as to improve screw fit depths of the tray fixing bolts 5 and the tray 2, thereby improving the fixing effect of the tray fixing bolts 5 and the tray 2 and support stability for tray 2.

In order to prevent the pressure relief cavity 9 from being exhausted from the communicating holes due to provision of the communicating holes, sealing parts 6 are provided between the fixed bosses 23 and the bottom guard plate 11 to seal the communicating holes. In addition, the sealing parts 6 can also avoid excessive compression between the fixing bosses 23 and the bottom guard plate 11, which is beneficial to protect the tray 2 and the bottom guard plate 11.

Optionally, the sealing parts 6 are sleeved outside the fixing bosses 23 and elastically abuts against the bottom guard plate 11. This arrangement structure is more compact, and the fixing bosses 23 can have a positioning effect on the sealing parts 6.

Optionally, the bottom guard plate 11 is protruded with second protruding parts 112, and the communicating holes are defined on the second protruding parts 112, that is, the tray fixing bolts 5 fixedly connect the bottom guard plate 11 and the second protruding parts 112. This arrangement can reduce distance between the bottom guard plate 11 and the tray 2, which is beneficial to reduce height of the fixed bosses 23, thereby reducing the cost and improving strength of a connection position of the bottom guard plate 11 and the tray 2.

In addition, in order to ensure that the gas can be discharged smoothly, bottoms of the battery cells and a bottom surface of the pressure relief cavity 9 need to have a certain height, so as to reduce exhaust pressure and increase exhaust speed. Optionally, sums of a depth H1 of each of the through holes 22 and a height H2 of each of the pressure relief cavities 9 are not less than 6 mm, so as to ensure the exhaust effect of the battery module, so as to quickly discharge the gas generated by the thermally runaway of the battery cells and improve safety performance of power battery.

Optionally, the depth H1 of each of the through holes 22 ranges from 2mm to 10mm, such as 2 mm, 3 mm, 4 mm, 5 mm, 6 mm, 7 mm, 8 mm, 9 mm, or 10 mm.

Optionally, the height H2 of each of the pressure relief cavities 9 ranges from 2 mm to 10 mm, such as 2 mm, 3 mm, 4 mm, 5 mm, 6 mm, 7 mm, 8 mm, 9 mm, or 10 mm.

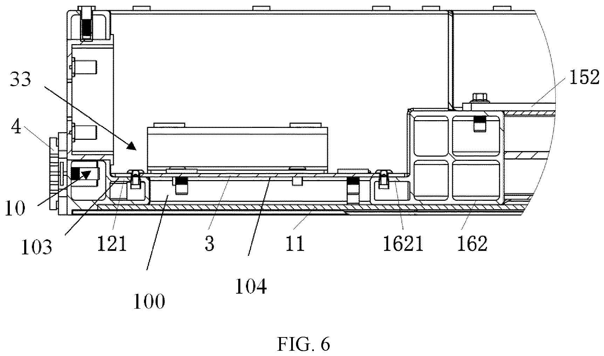

Because the battery module also needs to be provided with electrical components, in order to provide space for installing the electrical components, as shown in FIG. 1, FIG. 2, and FIG. 6, in this embodiment, a sealing plate mounting cavity 33 is defined in the case body 1, a sealing plate 3 is disposed in the case body 1, and the sealing plate 3 is disposed in the sealing plate mounting cavity 33 and is configured to install electrical components. Optionally, the second cross beam 162 and the front side plate 12 are arranged at intervals, the sealing plate mounting cavity 33 is defined between the second cross beam 162 and the front side plate 12 to install the sealing plate 3. The sealing plate 3 and the bottom guard plate 11 are spaced to define an exhaust channel 100, the exhaust channel 100 communicates with the pressure relief cavity 9 and the exhaust port 10 on the front side plate 12, respectively.

In order to prevent the gas in the exhaust channel 100 from contacting the electrical components through an installation gap between the sealing plate 3 and the sealing plate mounting cavity 33, the sealing plate mounting cavity 33 includes a third mounting surface 103 configured to support the sealing plate, and the sealing plate 3 includes a fourth mounting surface 104, and the third mounting surface 103 abuts against the fourth mounting surface 104, Optionally, flatness of the third mounting surface 103 and flatness of the fourth mounting surface 104 are both not greater than 0.5 mm.

By controlling the flatness of the third mounting surface 103 and the flatness of the fourth mounting surface 104, the installation gap between the third mounting surface 103 and the fourth mounting surface 104 can be controlled within a small range, and within this range, the gas located in the exhaust channel 100 cannot pass through the installation gap, so as to avoid the gas generated from the thermal runaway of the battery cells contact with the electrical components, which is beneficial to improve the safety performance of the battery module.

In addition, by controlling the flatness of the third mounting surface 103 and the flatness of the fourth mounting surface 104, the sealing parts 6 do not need to be arranged between the third mounting surface 103 and the fourth mounting surface 104, which is beneficial to simplify the structure of the battery module and reduce difficulty of assembly.

Optionally, the flatness of the third mounting surface 103 and the flatness of the fourth mounting surface 104 may be 0.4mm, 0.3mm, 0.2mm, or 0.1mm.

In order to facilitate installation of the sealing plate 3, the front side plate 12 and the second beam 162 are all provided with supporting bosses, and opposite sides of the sealing plate 3 are lap-jointed on the supporting bosses to fix the sealing plate 3. The supporting bosses on the front side plate 12 are defined as first bosses 121, and the first bosses 121 are arranged on a side of the front side plate 12 facing the second cross beam 162; the supporting bosses on the second cross beam 162 are defined as second bosses 1621, the second cross bosses 1621 is disposed on a side of the second cross beam 162 facing the front side plate 12.

Top surfaces of the first bosses 121 and top surfaces of the second bosses 1621 constitute at least part of the third mounting surface 103, and a bottom surface of the sealing plate 3 is the fourth mounting surface 104.

Optionally, the sealing plate 3 can be fixed to the bottom guard plate 11 by a sealing plate fixing bolt, and structure and fixing method of the sealing plate fixing bolt can refer to the tray fixing bolts 5.

In other embodiments, the sealing plate 3 may be fixed to the first bosses 121 and the second bosses 1621 by means of bonding, snap-fitting.

As shown in FIG. 5, the front side plate 12 is a hollow structure, and a first cavity is defined in the front side plate 12, and the first cavity is communicated with a pressure relief channel. After the gas enter the front side plate 12 from the pressure relief channel, it is discharged through the exhaust port 10. The first cavity is provided with a plurality of separators, the separators divide the first cavity into a plurality of sub-cavities, and the exhaust port 10 communicates with the pressure relief channel through one of the sub-cavities. By arranging the separators, the gas can be placed into other sub-cavities, which is conducive to realization of directional exhaust, so as to improve the exhaust speed and improve the safety performance of the battery module.

In this embodiment, the exhaust port 10 is provided with a pressure relief valve 4, and the pressure relief valve 4 can be automatically opened when the exhaust pressure reaches a preset value, so that the exhaust port 10 is automatically exhausted when exhaust is required, and closed when the exhaust is not required. It should be noted herein that the pressure relief valve 4 may adopt any structures in the related technology.

Optionally, the cross beams 1610 and the longitudinal beams 1510 along their length direction define a second cavity, ribs are disposed in the second cavity crosswise. By setting the cross beams 1610 and the longitudinal beams 1510 as hollow structures, gravity of the cross beams 1610 and the longitudinal beams 1510 can be reduced; strength of the cross beams 1610 and the longitudinal beams 1510 can be increased by providing the ribs.

This embodiment also provides an electric vehicle, including the above-mentioned battery module. The electric vehicle adopts the above-mentioned battery module, which can prevent thermal runaway of one of battery cells from spreading to other battery cells, thereby avoiding the thermal runaway of entire battery module.

Optionally, the case body 1 in the battery module may be formed on the electric vehicle to reduce a number of parts of the electric vehicle.

## Claims

1. A battery module, comprising a case body (1) and a tray (2); wherein
an exhaust port (10) is defined in the case body (1), a tray mounting cavity (7) is defined in the case body (1), and the tray mounting cavity (7) comprises a first mounting surface (101) surrounding a periphery of the tray (2);
the tray (2) is disposed in the tray mounting cavity (7), and divides the tray mounting cavity (7) into a cell accommodating cavity (8) located above the tray (2) and a pressure relief cavity (9) located below the tray (2), the tray (2) is provided with through holes (22) facing battery cells, the pressure relief cavity is communicated with the through holes (22) and the exhaust port (10), respectively, and the cell accommodating cavity (8) is configured to accommodate the battery cells; and
the tray (2) comprises a second mounting surface (102), and the second mounting surface (102) abuts against the first mounting surface (101).

2. The battery module according to claim 1, wherein the case body (1) comprises:
a bottom guard plate (11);
side plates (110), each side surface of the bottom guard plate (11) being connected to one of the side plates (110); and
a plurality of cross beams (1610) and a plurality of longitudinal beams (1510), wherein the plurality of cross beams (1610) and the plurality of longitudinal beams (1510) are crossed to define tray mounting cavities (7), top surfaces of the cross beams (1610) and top surfaces of the longitudinal beams (1510) constitute the first mounting surface (101).

3. The battery module according to claim 2, wherein at least part of the cross beams (1610), at least part of the longitudinal beams (1510) are spaced from the bottom guard plate (11), so that pressure relief cavities (9) in a plurality of tray mounting cavities (7) communicate with each other.

4. The battery module according to claim 2, wherein the longitudinal beams (1510) comprise first longitudinal beams (151), the cross beams (1610) comprise a first cross beam (161), and the first cross beam (161) and the first longitudinal beam (151) are respectively connected to adjacent ones of the side plates (110).

5. The battery module according to claim 4, wherein the first cross beam (161) and the first longitudinal beam (151) are both protruding structures of corresponding ones of the side plates (110).

6. The battery module according to claim 4, wherein a sealing plate mounting cavity (33) and a sealing plate (3) are disposed in the case body (1), and the sealing plate mounting cavity (33) comprises a third mounting surface (103) configured to support the sealing plate (3), the sealing plate (3) comprises a fourth mounting surface (104), the third mounting surface (103) abuts against the fourth mounting surface (104), the sealing plate (3) and the bottom guard plate (11) are spaced to define an exhaust channel (100), and the exhaust channel (100) communicates with the exhaust port (10) and the pressure relief cavity (9), respectively.

7. The battery module according to claim 2, wherein first protruding parts (111) are provided on the bottom guard plate (11), and the cross beams (1610) and the longitudinal beams (1510) are fixed on the first protruding parts (111) by spot welding.

8. The battery module according to claim 2, wherein a plurality of second protruding parts (112) are provided at intervals on the bottom guard plate (11), and the second protruding parts (112) are connected to a bottom surface of the tray (2).

9. The battery module according to claim 8, wherein the tray (2) and the second protruding parts (112) are fixed by tray fixing bolts (5).

10. The battery module according to claim 1, wherein flatness of the second mounting surface (102) and flatness of the first mounting surface (101) are both not greater than 0.5 mm.

11. The battery module according to claim 6, wherein flatness of the third mounting surface (103) and flatness of the fourth mounting surface (104) are both not greater than 0.5 mm.

12. An electric vehicle, comprising the battery module of any one of claims 1-11.
